(19) Europäisches Patentamt
European Patent Office
Office européen des brevets

(11) EP 1 029 009 B1

(12) EUROPÄISCHE PATENTSCHRIFT

(45) Veröffentlichungstag und Bekanntmachung des Hinweises auf die Patenterteilung:
**03.11.2004 Patentblatt 2004/45**

(21) Anmeldenummer: **98964399.4**

(22) Anmeldetag: **13.11.1998**

(51) Int Cl.$^7$: **C09D 17/00**, C09D 7/12

(86) Internationale Anmeldenummer:
**PCT/EP1998/007284**

(87) Internationale Veröffentlichungsnummer:
**WO 1999/025780 (27.05.1999 Gazette 1999/21)**

# (54) ZUBEREITUNGEN AUS PIGMENT UND PHOSPHONATHALTIGEM HARZ

PREPARATIONS MADE OF PIGMENTS AND RESIN CONTAINING PHOSPHONATE

PREPARATIONS A BASE DE PIGMENTS ET DE RESINE CONTENANT DU PHOSPHONATE

(84) Benannte Vertragsstaaten:
**DE ES FR IT NL**

(30) Priorität: **14.11.1997 DE 19750618**

(43) Veröffentlichungstag der Anmeldung:
**23.08.2000 Patentblatt 2000/34**

(73) Patentinhaber: **BASF AKTIENGESELLSCHAFT**
**67056 Ludwigshafen (DE)**

(72) Erfinder:
- **DERSCH, Rolf**
  **D-67434 Neustadt (DE)**
- **ROSER, Joachim**
  **D-68165 Mannheim (DE)**
- **SCHLARB, Bernhard**
  **D-67067 Ludwigshafen (DE)**
- **ZHAO, Cheng-Le**
  **D-68723 Schwetzingen (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 366 569**
**EP-A- 0 398 487**
**EP-A- 0 412 027**
**EP-A- 0 477 433**
**WO-A-94/01476**
**WO-A-99/06450**
**DE-A- 2 638 544**

- **DATABASE WPI Section Ch, Week 9430 Derwent Publications Ltd., London, GB; Class A14, AN 94-245767 XP002096741 & JP 06 179790 A (DAINIPPON INK & CHEM KK) , 28. Juni 1994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 029 009 B1

## Beschreibung

Die vorliegende Erfindung betrifft pigmenthaltige Zubereitungen, die als Bindemittel wenigstens eine wässrige Polymerisatdispersion enthalten, deren Polymerisat mit Phosphonatgruppen funktionalisiert ist.

Pigmenthaltige Zubereitungen finden als Dispersionsfarben, kunstharzgebundene Putze (Dispersionsputze), Dichtungsmassen oder als Spachtelmassen zu Zwecken des Bautenschutzes oder zu dekorativen Zwecken breite Verwendung. Pigmenthaltige Zubereitungen enthalten in der Regel als Bindemittel ein filmbildendes Polymer, wenigstens ein anorganisches Pigment und gegebenenfalls einen oder mehrere anorganische Füllstoffe sowie übliche Hilfsmittel. Die Qualität der Beschichtungen von pigmentierten Zubereitungen hängt maßgeblich von der Fähigkeit des filmbildenden Polymers ab, die nichtfilmbildenden Bestandteile, die Pigmente und anorganische Füllstoffe gleichmäßig zu binden.

Ein geringes Pigmentbindevermögen führt zu einer schlechten mechanischen Stabilität der Beschichtung, die sich beispielsweise in einer geringen Nassabriebfestigkeit äußert. Eine hohe Nassabriebfestigkeit ist jedoch insbesondere bei waschbeständige Dispersionsfarben erwünscht.

Das Pigmentbindevermögen des Bindemittels spielt eine besonders wichtige Rolle bei Zubereitungen mit einem hohen Gehalt an anorganischen Pigmenten und Füllstoffen. Derartige Zubereitungen sind in der Regel durch eine Pigmentvolumenkonzentration PVK > 40 % charakterisiert. Die Pigmentvolumenkonzentration wird üblicherweise definiert als der Quotient aus dem Gesamtvolumen der festen anorganischen Bestandteile (Pigment + Füllstoffe), geteilt durch das Gesamtvolumen der festen anorganischen Bestandteile und der Polymerisatteilchen der wässrigen Bindemittelpolymerisatdispersion in %; siehe Ullmanns Enzoklopädie der technischen Chemie, 4. Auflage, Band 15, S. 668.

Die Beschichtungsmassen sollten insbesondere bei Anwendungen im Außenbereich gegenüber Umwelteinflüssen, wie Sonnenlicht, Feuchtigkeit und Temperaturschwankungen stabil sein. Ferner muss die Beschichtungsmasse auch auf unterschiedlichen Substraten gut haften, was ebenfalls vom gewählten Bindemittelpolymer abhängt.

Eine weitere, vom Bindemittelpolymer abhängige Eigenschaft ist die Blockfestigkeit der Beschichtungen.

Die EP-A-184 091 beschreibt Beschichtungsmittel auf der Basis wässriger Polymerisatdispersionen, die eine niedrige Filmbildetemperatur aufweisen und Filme mit hoher Blockfestigkeit bilden. Die dort offenbarten Polymerisatdispersionen können auch vernetzend wirkende Monomere einpolymerisiert enthalten. Die beschriebenen Beschichtungsmassen enthalten nur in geringer Menge anorganische Stoffe und Pigmente.

Die EP-A-327 006 und die EP-A-327 376 beschreiben wässrige Polymerisatdispersionen, die Siloxangruppen enthaltende Monomere einpolymerisiert enthalten. Derartige Monomere sind jedoch teuer, so dass bereits eine geringe Menge die Herstellungskosten für das Bindemittel in beträchtlichem Maße erhöht. Zudem muss damit gerechnet werden, dass durch Hydrolyse der Siloxangruppen die Eigenschaften des Bindemittels bei Lagerung verändert werden.

Die US-4,219,454 beschreibt Bindemittel für Beschichtungsmassen auf der Basis wässriger Polymerisatdispersionen, die zur Verbesserung der Haftfestigkeit der Beschichtungen im feuchten Zustand Harnstoffgruppen enthaltende Monomere einpolymerisiert enthalten. Die dort beschriebenen Beschichtungen weisen jedoch nur geringe Pigmentgehalte auf. Das Problem der Nassabriebfestigkeit von Beschichtungsmassen wird durch die dort beschriebenen Polymerisate nur unzureichend gelöst.

Aus der GB 1,189,560 sind Latexfarben (= Dispersionsfarben) bekannt, denen zur besseren Dispergierung der anorganischen Pigmente niedermolekulare Alkylphosphate oder Alkylphosphonate zugesetzt werden.

Aus der EP-A-625 541 sowie aus der WO 93/11181 sind Titandioxid enthaltende Zubereitungen bekannt, die als Bindemittel wässrige Polymerisatdispersionen enthalten, deren Polymerisate Phosphatgruppen aufweisen. Die Phosphatgruppen führen zu einer verbesserten Adsorption der Latexteilchen auf der Oberfläche der Pigmentpartikel. Die Lagerstabilität der dort offenbarten Zubereitungen lässt jedoch zu wünschen übrig, da deren Viskosität im Laufe der Zeit zunimmt.

Die US-4,110,285 schlägt Phosphatgruppen enthaltende Polymerisate als Bindemittel für hochglänzende Dispersionsfarben vor. Auch hier stellt sich das Problem der Lagerstabilität.

Die Bindemittel des Standes der Technik vermögen die Forderungen, die an Beschichtungsmassen gestellt werden, nur teilweise zu erfüllen. Der vorliegenden Erfindung liegt daher die Aufgabe zugrunde, pigmenthaltige Zubereitungen bereitzustellen, die ein hohes Pigmentbindevermögen, d. h. eine hohe Nassabriebfestigkeit, eine hohe Nasshaftung auf verschiedensten Untergründen und eine gute Blockfestigkeit aufweisen. Diese Eigenschaften müssen auch bei höheren Pigmentvolumenkonzentrationen, d. h. PVK > 40% gewahrt bleiben. Auch sollten die Zubereitungen lagerstabil sein, d. h. ihre Viskosität sollte auch bei längerer Lagerung nicht oder nur unwesentlich zunehmen.

Diese Aufgabe konnte überraschenderweise gelöst werden, wenn man für die Zubereitungen Bindemittel auf der Basis wässriger Polymerisatdispersionen verwendet, deren Polymerisate mit Phosphonatgruppen modifiziert sind.

Demnach betrifft die vorliegende Erfindung Zubereitungen zum Beschichten von Substraten, die

i) wenigstens ein Polymerisat P, das Phosphonatgruppen aufweist, als Bindemittel,

ii) wenigstens ein anorganisches Pigment,
iii) gegebenenfalls einen oder mehrere anorganische Füllstoffe und
iv) übliche Hilfsmittel

enthalten, wobei das Polymerisat P gemäß Anspruch 1 definiert ist.

Die in den erfindungsgemäßen Zubereitungen zu verwendenden Phosphonatgruppen enthaltenden Polymerisate P sind grundsätzlich auf verschiedenen Wegen zugänglich. Zum einen kann man die Phosphonatgruppen durch polymeranaloge Umsetzung in einem konventionellen Polymer erzeugen. Dies setzt lediglich voraus, dass das Polymer reaktive, funktionelle Gruppen aufweist, die einer polymeranalogen Umsetzung zugänglich sind. Beispielsweise kann man so vorgehen, dass man eine reaktive, funktionelle Gruppe des Polymers im Sinne einer polymeranalogen Reaktion mit einer Phosphonatgruppen-haltigen Verbindung, die ihrerseits eine reaktive, funktionelle Gruppe aufweist, die komplementär zu der reaktiven Gruppe auf dem Polymer ist, umsetzt. So bietet sich beispielsweise die Umsetzung von Polymeren, die Glycidylgruppen aufweisen, mit Phosphonatgruppen enthaltenden Verbindungen, die zusätzlich Aminogruppen aufweisen, und umgekehrt an. Die Umsetzung von Phosphonatgruppen kann beispielsweise im Sinne einer Moedritzer-Reaktion (Moedritzer et al, J. Org. Chem. 31, 1966, S. 1603) durch Umsetzung Aminogruppen enthaltender Polymere mit phosphoriger Säure in Gegenwart von Formaldehyd erfolgen.

Die Herstellung Phosphonatgruppen enthaltender Polymere P als auch die Herstellung geeigneter Präpolymere, die erst nachträglich durch polymeranaloge Reaktion in die Phosphonatgruppen enthaltenden Polymere P überführt werden, kann grundsätzlich durch alle bekannten Polymerisationsverfahren für ethylenisch ungesättigte Monomere, wie Substanz-, Lösungs-, Fällungs-, Suspensionsoder Emulsionspolymerisation erfolgen. Bevorzugt erfolgt die Herstellung durch Emulsionspolymerisation. Sie bietet sich insbesondere dann an, wenn die Phosphonatgruppen durch Einpolymerisieren geeigneter Phosphonatgruppen enthaltender Monomere in das Polymerisat P eingeführt werden.

In der Regel werden die Polymerisate P in Form wässriger Dispersionen in den erfindungsgemäßen pigmenthaltigen Zubereitungen verwendet. Nicht zuletzt aus diesem Grund empfiehlt sich für die Herstellung der Polymerisate P die radikalische wässrige Emulsionspolymerisation. Polymerisate P, die auf anderem Wege erhältlich sind, können durch geeignete, aus dem Stand der Technik bekannte Maßnahmen in wässrige Dispersionen überführt werden (sog. Sekundärdispersionen).

Vorzugsweise sind die in den erfindungsgemäßen Zubereitungen zur Anwendung kommenden wässrigen Polymerisatdispersionen durch radikalische, wässrige Emulsionspolymerisation ethylenisch ungesättigter Monomere erhältlich, wobei man wenigstens ein Monomer a und wenigstens ein davon verschiedenes Monomer b der allgemeinen Formel I

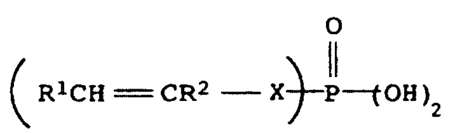

(I)

worin

$R^1$ für Wasserstoff, $C_1$-$C_4$-Alkyl, COOH, $-CO_2$-Alk-OH oder - $CO_2$-Alk-$P(O)(OH)_2$ und

$R^2$ für Wasserstoff, Alkyl, $-CH_2-CO_2H$, $-CH_2-CO_2$-Alk-OH oder $CH_2-CO_2$-Alk-$P(O)(OH)_2$ stehen, worin Alk $C_1$-$C_4$-Alkylen bedeutet,

X eine Einfachbindung, Alkylen, Arylen, $-R^3$-Z-O-$R^4$- oder - $R^3$-Z-NH-$R^4$- bedeutet, worin

- $R^3$ an ein Kohlenstoffatom der Doppelbindung gebunden ist und für eine Einfachbindung, Alkylen oder Arylen steht,
- $R^4$ Alkylen oder Arylen bedeutet und
- Z für CO oder $SO_2$ steht,

oder ein Salz davon miteinander umsetzt.

Im Folgenden steht Alkyl vorzugsweise für lineare oder verzweigte $C_1$-$C_{12}$-Alkylgruppen, insbesondere $C_1$-$C_8$-Alkylgruppen, z. B. Methyl, Ethyl, n-Propyl, i-Propyl, 1-Butyl, 2-Butyl, i-Butyl, t-Butyl, 1-Pentyl, 2-Pentyl, 3-Pentyl, 1-Hexyl oder 2-Ethylhexyl. Cycloalkyl steht vorzugsweise für Cyclopentyl oder Cyclohexyl. Aryl steht vorzugsweise für Phenyl oder Naphthyl, die gegebenenfalls auch 1 bis 4 Substituenten tragen können, die unabhängig voneinander ausgewählt sind unter $C_1$-$C_4$-Alkyl, insbesondere Methyl oder Ethyl, $C_1$-$C_4$-Alkoxy, z. B. Methoxy oder Ethoxy, Hydroxy, das gegebenenfalls auch ethoxyliert sein kann, oder Halogen. Alkylen steht für einen zweiwertigen Alkylrest, vorzugsweise einen $C_1$-$C_{12}$-Alkylrest, z. B. Methylen, 1,1- oder 1,2-Ethylen, 1,1-, 1,2-, 1,3-, 2,2-Propylen, 1,4-Butylen, 2-Methyl-1,2-propylen, 1,6-Hexylen und 1,8-Octylen. Arylen steht für einen zweiwertigen Arylrest, vorzugsweise für 1,2- oder 1,4-Phenylen. Aralkyl steht für einen Arylrest, der an das jeweilige Zentrum über eine Alkylengruppe gebunden ist. Oxyalkylen steht für eine Alkyleneinheit, die über ein Sauerstoffatom an das Polymer gebunden ist, entsprechend steht Polyoxyalkylen für Alkyleneinheiten, die jeweils durch Sauerstoffatome miteinander verbunden sind.

Bevorzugt steht $R^1$ in der allgemeinen Formel I für Wasserstoff. $R^2$ steht bevorzugt für Wasserstoff oder Methyl. X steht bevorzugt für eine Einfachbindung, $C_1$-$C_4$-Alkylen, insbesondere Methylen, oder für Arylen, insbesondere 1,2-, 1,3- oder 1,4-Phenylen. Bevorzugt steht X auch für eine Gruppe -$R^3$-Z-NH-$R^4$-, worin $R^3$ eine Einfachbindung ist und Z für eine Carbonylfunktion steht. $R^4$ steht in diesem Falle bevorzugt für $C_1$-$C_4$-Alkylen, insbesondere für 1,2-Ethylen und 2-Methyl-1,2-propylen. Beispiele für geeignete Phosphonatgruppen enthaltende Monomere der allgemeinen Formel I umfassen, Vinylphosphonsäure, Allylphosphonsäure, $\alpha$-Phosphonostyrol, 2-Acrylamido-2-methylpropanphosphonsäure, 2-Methacrylamido-2-methylpropanphosphonsäure und deren Salze, z. B. deren Alkalimetallsalze.

Besonders bevorzugte Monomere b sind Vinylphosphonat und Allylphosphonat bzw. deren Salze, insbesondere deren Natriumsalze. Die Phosphonatgruppen enthaltenden Monomere b machen vorzugsweise 0,1 bis 10 Gew.-% und insbesondere 0,2 bis 5 Gew.-% und besonders bevorzugt 0,5 bis 3 Gew.-% der Gesamtmonomermenge aus.

Geeignete Monomere a sind ausgewählt unter vinylaromatischen Monomeren wie Styrol, $\alpha$-Methylstyrol, ortho-Chlorstyrol oder Vinyltoluole, Vinylester von $C_1$-$C_{18}$- und vorzugsweise $C_1$-$C_{12}$-Monocarbonsäuren wie Vinylacetat, Vinylpropionat, vinylbutyrat, Vinylvalerat, Vinylhexanoat, Vinyl-2-ethylhexanoat, Vinyldecanoat, Vinyllaurat, Vinylstearat und Vinylversatate® (Vinylester verzweigter, aliphatischer Carbonsäuren mit 6 bis 11 C-Atomen, die als Versatic® X-Säuren der Shell im Handel sind). Weiterhin kommen Ester $\alpha,\beta$-ethylenisch ungesättigter $C_3$-$C_8$-Mono- oder $C_4$-$C_8$-Dicarbonsäuren, vorzugsweise mit $C_1$-$C_{12}$- und insbesondere $C_1$-$C_8$-Alkanolen oder $C_5$-$C_8$-Cycloalkanolen in Frage. Geeignete $C_1$-$C_{12}$-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich um (Meth)acrylsäuremethylester, (Meth)acrylsäureethylester, (Meth)acrylsäure-n-butylester, (Meth)acrylsäureisobutylester, (Meth)acrylsäure-1-hexylester, (Meth)acrylsäure-2-ethylhexylester; Maleinsäuredimethylester oder Maleinsäuredi-n-butylester. Weiterhin kommen Nitrile $\alpha,\beta$-monoethylenisch ungesättigter $C_3$-$C_8$-Carbonsäuren, wie Acrylnitril oder Methacrylnitril in Betracht. Darüber hinaus können auch $C_4$-$C_8$-konjugierte Diene, wie 1,3-Butadien, Isopren oder Chloropren als Monomere a eingesetzt werden. Die genannten Monomere machen vorzugsweise 90 bis 99,9 Gew.-% und speziell 95 bis 99,7 Gew.-%, bezogen auf das Gesamtgewicht der eingesetzten Monomere aus. Vorzugsweise umfassen die Monomere a wenigstens zwei voneinander verschiedene Monomere a1 und a2. Bevorzugte Monomere a1, a2 sind die $C_1$-$C_{12}$-Alkylester der Acrylsäure und der Methacrylsäure, vinylaromatische Monomere, insbesondere Styrol und $\alpha$-Methylstyrol und die Vinylester aliphatischer $C_1$-$C_{12}$-Carbonsäuren, vorzugsweise Vinylacetat und Vinylpropionat, die gegebenenfalls in Kombination mit Vinylchlorid und/oder Ethylen, mit Vinylversataten oder mit $C_1$-$C_8$-Alkylacrylaten als Monomere a eingesetzt werden.

Die Bindemittelpolymerisate P enthalten vorzugsweise auch Monomere c einpolymerisiert, die die Nasshaftung der erfindungsgemäßen Zubereitungen verbessern. Hierzu zählen ethylenisch ungesättigter Verbindungen, die Harnstoffgruppen aufweisen (Monomere c), z. B. N-Vinyl- und N-Allylharnstoff und Derivate des Imidazolidin-2-ons, z. B. N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on, N-[2-((Meth)acryloxyacetamido)ethyl)imidazolidin-2-on etc. Die Monomere c werden vorzugsweise in Mengen von 0,1 bis 10 Gew.-%, insbesondere 0,5 bis 5 Gew.-%, bezogen auf die Gesamtmonomermenge, verwendet.

Ferner kann das Polymerisat P auch Monomere d in einpolymerisierter Form enthalten, deren Homopolymerisate eine erhöhte Wasserlöslichkeit oder Wasserquellbarkeit aufweisen. Diese Monomere werden vorzugsweise in Mengen von < 5 Gew.-% und vorzugsweise < 2 Gew.-%, bezogen auf die Gesamtmonomermenge, mit einpolymerisiert. Derartige Monomere verbessern die Stabilität der Polymerisatdispersionen. Hierzu zählen unter anderem Monomere, die saure Gruppen enthalten (Monomere d1), wie $\alpha,\beta$-monoethylenisch ungesättigte Mono- und Dicarbonsäuren mit 3 bis 10 C-Atomen sowie ethylenisch ungesättigte Sulfonsäuren und deren wasserlösliche Salze. Beispiele für Monomere d1 mit sauren Gruppen sind die oben genannten ethylenisch ungesättigten Carbonsäuren oder Dicarbonsäuren, insbesondere Acrylsäure und Methacrylsäure, ferner Vinylund Allylsulfonsäure, (Meth)acrylamidoethansulfonsäure, Methacrylamido-2-methyl-propansulfonsäure, und die Alkalimetallsalze der Sulfonsäuren, insbesondere deren Natriumsalze. Hier ist jedoch zu beachten, dass ein hoher Gehalt an Säuregruppen im Bindemittelpolymerisat die Wasserfestigkeit von Beschichtungen herabsetzt. Bevorzugt enthält das Polymerisat P außer den erfindungsgemäßen Phosphonatgruppen enthaltenden Monomeren b keine weiteren Monomere, die eine saure Gruppe aufweisen. Die Monomere d umfassen auch neutrale bzw. nichtionische, modifizierende Monomere d2, z. B. die Amide, die N-Alkylolamide oder die Hydroxyalkylester der genannten Carbonsäuren wie Acrylamid, Methacrylamid, N-Methylolacrylamid, N-Methylolmethacrylamid, 2-Hydroxyethylacrylamid, 2-Hydroxyethylmethacrylamid, Hydroxyethylacrylat, Hydroxyethylmethacrylat, Hydroxypropylacrylat und Hydroxypropylmethacrylat.

Weiterhin können bifunktionelle Monomere e bei der Herstellung des Polymerisats P eingesetzt werden. Diese werden, sofern erwünscht, in untergeordneter Menge, in der Regel 0,1 bis 5 Gew.-% und insbesondere bis 1 Gew.-%, bezogen auf die Gesamtmonomermenge, mit einpolymerisiert. Hierbei handelt es sich vorzugsweise um Monomere, die zwei nicht-konjugierte, ethylenisch ungesättigte Bindungen aufweisen, z. B. die Diester zweiwertiger Alkohole mit $\alpha,\beta$-monoethylenisch ungesättigten $C_3$-$C_8$-Carbonsäuren, z. B. Glykolbisacrylat oder Ester von $\alpha,\beta$-ungesättigten Carbonsäuren mit Alkenolen, z. B. Bicyclodecenyl(meth)acrylat. Bevorzugte Polymerisate P enthalten keine Monomere e einpolymerisiert.

Die Bindemittelpolymerisate können selbstverständlich auch Monomere enthalten, die die Pigmentbindekraft bekanntermaßen verbessern. Hier sind beispielsweise Siloxangruppen enthaltende Monomere, wie die Vinyltrialkoxysilane, z. B. vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan zu nennen. Die genannten Monomere können in Mengen von bis zu 1 Gew.-%, vorzugsweise 0,05 bis 0,5 Gew.-%, bezogen auf die Gesamtmonomermenge, verwendet werden.

Weiterhin hängt die Eigenschaft der erfindungsgemäßen Zubereitungen von der Glasübergangstemperatur (DSC, midpoint temperature, ASTM D 3418-82) des Bindemittelpolymerisats P ab. Ist diese zu niedrig, weist die Beschichtung nur eine geringe Festigkeit auf und reißt bei mechanischer Belastung aus. Ist sie zu hoch, verfilmt das Polymerisat nicht mehr. Als Folge weist die Beschichtung eine verringerte Nassabriebfestigkeit auf. Die Glasübergangstemperatur der in Frage kommenden Bindemittelpolymerisate P liegt daher in der Regel unterhalb 80 °C, vorzugsweise unterhalb 60 °C und besonders bevorzugt unterhalb 40 °C. Im Allgemeinen liegt sie jedoch oberhalb -60 °C, vorzugsweise oberhalb -10 °C und insbesondere oberhalb 0 °C. Hierbei erweist es sich als hilfreich, die Glasübergangstemperatur $T_g$ des dispergierten Polymerisats abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^{\,1}} + \frac{X^2}{T_g^{\,2}} + ..... \frac{X^n}{T_g^{\,n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Aus dem Gesagten wird deutlich, dass die Glastemperatur eines Polymerisats sowohl durch Wahl eines geeigneten Hauptmonomers a, das eine Glasübergangstemperatur im gewünschten Bereich aufweist, als auch durch Kombination wenigstens eines Monomers a1 mit hoher Glasübergangstemperatur und wenigstens eines Monomers a2 mit niedriger Glasübergangstemperatur eingestellt werden kann, wobei letztere Vorgehensweise bevorzugt ist.

In einer bevorzugten Ausführungsform der vorliegenden Erfindung umfassen die das Polymer P konstituierenden Monomere a wenigstens ein Monomer a1, dessen Homopolymerisat im Grenzfall einer sehr hohen (unendlichen) Molmasse eine Glasübergangstemperatur Tg > 30 °C aufweist, und wenigstens ein Monomer a2, dessen Homopolymerisat eine Glasübergangstemperatur $T_g$ < 20 °C aufweist. Für diesen Zweck geeignete Monomere a1 sind beispielsweise Styrol, $\alpha$-Methylstyrol, Methylmethacrylat, Ethylmethacrylat, n- und iso-Propylmethacrylat, n-, iso- und tert.-Butylmethacrylat, tert.-Butylacrylat und Vinylacetat, ferner Acrylnitril und Methacrylnitril, wobei die beiden Nitrile vorzugsweise nicht mehr als 30 Gew.-% der Monomere a1 ausmachen. Für diesen Zweck geeignete Monomere a2 sind z. B. die $C_1$-$C_{12}$-Alkylacrylate, Butadien, Vinylversatate, insbesondere Ethylacrylat, n-Butylacrylat und 2-Ethylhexylacrylat. Besonders bevorzugt werden Monomerkombinationen a1/a2 die Styrol und/oder Methylmethacrylat sowie n-Butylacrylat und gegebenenfalls 2-Ethylhexylacrylat umfassen.

In einer besonders bevorzugten Ausführungsform der vorliegenden Erfindung ist das Bindemittelpolymerisat P aufgebaut aus:

i) 20 bis 80 Gew.-%, vorzugsweise 35 bis 70 Gew.-% Monomeren a1, insbesondere Styrol und/oder Methylmethacrylat,

ii) 20 bis 80 Gew.-%, vorzugsweise 30 bis 65 Gew.-% Monomeren a2, insbesondere n-Butylacrylat und/oder Ethylhexylacrylat,

iii) 0,2 bis 5 Gew.-%, vorzugsweise 0,5 bis 3 Gew.-%, wenigstens eines Monomers b, insbesondere Vinylphosphonat, Allylphosphonat und/oder 2-Methacrylamido-2-methylpropanphosphonsäure oder deren Natriumsalze,

iv) 0,5 bis 5 Gew.-%, vorzugsweise 1 bis 3 Gew.-% Monomeren c mit wenigstens einer Harnstoffgruppe, insbesondere ein ethylenisch ungesättigtes Derivat des Imidazolidin-2-ons,

wobei sich die Gewichtsteile der Monomere a1, a2, b und c zu 100 Gew.-% addieren.

Ferner hat es sich als vorteilhaft erwiesen, wenn die Polymerisatteilchen in der Bindemittelpolymerisatdispersion einen gewichtsmittleren Polymerisatteilchendurchmesser im Bereich von 50 bis 1000 nm (bestimmt mittels Ultrazentrifuge oder Photonenkorrelationsspektroskopie; zur Teilchengrößenbestimmung mittels Ultrazentrifuge siehe z. B. W. Mächtle, Makromolekulare Chemie, 1984, Bd. 185, 1025-1039, W. Mächtle, Angew. Makromolekulare Chemie, 1988, 162, 35-42) aufweisen. Bei Bindemitteldispersionen mit hohen Feststoffgehalten, z. B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 250 nm ist. Der mittlere Teilchendurchmesser wird in der Regel 1 000 nm und vorzugsweise 600 nm nicht überschreiten.

Die Herstellung der erfindungsgemäß zur Anwendung kommenden wässrigen Polymerisatdispersionen erfolgt vorzugsweise durch radikalische wässrige Emulsionspolymerisation der genannten Monomere in Gegenwart wenigstens eines radikalischen Polymerisationsinitiators und gegebenenfalls einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate als auch um Azoverbindungen handeln. Als Polymerisationsinitiatoren werden häufig sog. Redoxinitiatoren verwendet, die aus wenigstens einem organischen Reduktionsmittel und wenigstens einem Peroxid und/oder Hydroperoxid zusammengesetzt sind, z. B. tert.-Butylhydroperoxid mit Schwefelverbindungen, z. B. dem Natriumsalz der Hydroxymethansulfinsäure, Natriumsulfit, Natriumdisulfit, Natriumthiosulfat oder Acetonbissulfit oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z. B. Ascorbinsäure/Eisen(II)sulfat/Wasserstoffperoxid, wobei anstelle von Ascorbinsäure auch häufig das Natriumsalz der Hydroxymethansulfinsäure, Acetonbissulfit, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1,0 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, s. 192-208.

Zu den anionischen grenzflächenaktiven Substanzen zählen auch Verbindungen der allgemeinen Formel II,

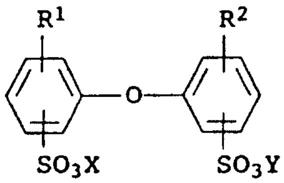

(II)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. In der Formel II bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammonium, wobei Natrium besonders bevorzugt ist. Besonders vorteilhaft sind Verbindungen II, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen II sind allgemein bekannt, z. B. aus der US-A-4,269,749, und im Handel erhältlich.

Neben den genannten anionischen Emulgatoren können auch nichtionische Emulgatoren verwendet werden. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxilierungsgrad von 8 bis 50. Bevorzugt werden anionische Emulgatoren oder Kombinationen aus wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie 'Encyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere d, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 95 °C und besonders bevorzugt zwischen 50 und 90°C.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die erfindungsgemäßen Zubereitungen Polymerisatdispersionen mit Feststoffgehalten im Bereich von 40 bis 70 Gew.-% bevorzugt. Besonders bevorzugt werden Dispersionen mit Polymergehalten > 50

Gew.-%. Natürlich sind auch Dispersionen mit geringeren Feststoffgehalten prinzipiell für die erfindungsgemäßen Zubereitungen einsetzbar.

Erfindungsgemäß werden die Phosphonatgruppen enthaltenden Polymerisate P in Form ihrer wässrigen Polymerisatdispersionen als Bindemittel in solchen pigmenthaltigen Zubereitungen eingesetzt, die zur Beschichtung von Substraten dienen. Hierunter versteht man beispielsweise Kunststoffdispersionsputze, Fliesenkleber, Anstrichmittel, Dichtmassen oder Versiegelungsmassen, insbesondere für poröse Bauteile.

Eine bevorzugte Ausführungsform der vorliegenden Erfindung betrifft Zubereitungen in Form von Dispersionsfarben.

Die erfindungsgemäßen Zubereitungen, vorzugsweise die Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln, z. B. Weichmacher, und polymere Hilfsmittel. Davon entfallen etwa

i 5 bis 90 Gew.-%, vorzugsweise 10 bis 60 Gew.-%, auf feste Bindemittelbestandteile (= Polymerisat P)

ii 5 bis 85 Gew.-%, vorzugsweise 10 bis 60 Gew.-%, auf wenigstens ein anorganisches Pigment,

iii 0 bis 85 Gew.-%, vorzugsweise 20 bis 70 Gew.-%, auf anorganische Füllstoffe und

iv 0,1 bis 40 Gew.-%, vorzugsweise 0,5 bis 15 Gew.-%, auf übliche Hilfsmittel.

Die PVK der Zubereitungen liegt in der Regel oberhalb 10 %, z. B. 15 bis 75 %. In einer bevorzugten Ausführungsform der Erfindung liegt sie im Bereich von 15 bis 25 %. In einer anderen bevorzugten Ausführungsform der Erfindung liegt die PVK im Bereich von > 40 % bis 60 Gew.-%, z. B. bei etwa 45 Gew.-%. In einer weiteren bevorzugten Ausführungsform der Erfindung ist die PVK > 60 %, vorzugsweise > 70 %, und kann bis zu 85 % betragen.

Typische Pigmente für die erfindungsgemäßen Zubereitungen, insbesondere für Dispersionsfarben, sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Dispersionsputze können auch gröbere Zuschläge, wie Sände oder Sandsteingranulate, enthalten. In Dispersionsfarben werden naturgemäß feinteilige Füllstoffe bevorzugt.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln iv. zählen Netz- oder Dispergiermittel, wie Natrium- oder Kaliumpolyphosphate, Alkalimetallsalze von Polyacrylsäuren, Alkalimetallsalze von Polymaleinsäure, Polyphosphonate, wie 1-Hydraxyethan-1,1-diphosphonsaures Natrium sowie Naphthalinsulfonsäuresalze, insbesondere deren Natriumsalze, Die Dispergiermittel bzw. Netzmittel werden in der Regel in einer Menge von 0.1 bis 0.6 Gew.-% bezogen auf das Gesamtgewicht der Dispersionsfarbe eingesetzt.

Ferner umfassen die Hilfsmittel iv gegebenenfalls auch Verdikkungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al. in J. Coatings Techn. Vol 69, No. 867, 1997, S. 73 und von R. D. Hester et al. J. Coatings Technology, Vol. 69, No. 864, 1997, 109 beschrieben sind und auf deren Offenbarung hiermit in vollem Umfang Bezug genommen wird.

Beispiele für hydrophob modifizierte Polyetherurethane sind Polymere der allgemeinen Formel III

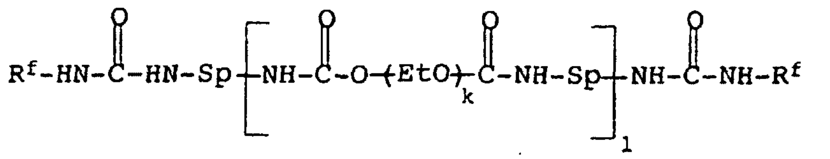 (III)

worin $R^f$ für einen hydrophoben Rest, vorzugsweise einen linearen oder verzweigten Alkylrest mit 10 bis 20 Kohlenstoffatomen, Et für 1,2-Ethylen steht, Sp für $C_2$-$C_{10}$-Alkylen, Cycloalkylen oder Arylen steht, k für eine Zahl im Bereich von 50 bis 1 000 und 1 für eine Zahl im Bereich von 1 bis 10, wobei vorzugsweise das Produkt k x 1 im Bereich von 300 bis 1 000 liegt.

Auch anorganische Verdickungsmittel, z. B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet. Ferner umfassen die Hilfsmittel iv in der Regel auch Entschäumer, Konservierungs- oder Hydrophobiermittel, Biozide, Fasern oder weitere Bestandteile.

Auch können die Beschichtungsmassen zur Einstellung der Filmbildeeigenschaften der Bindemittelpolymerisate, sog. Filmbildekonsolidierungsmittel (Weichmacher), z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicarbonsäuren, z. B. Texanol® der Eastman, oder technische Gemische von Dibutylestern der Bernsteinsäure, Glutarsäure und Adipinsäure, ferner Kohlenwasserstoffe bzw. deren Gemische, mit oder ohne aromatische Bestandteile, z. B. Testbenzine des Siedebereichs 140 bis 210 °C, enthalten. Filmbildehilfsmittel werden üblicherweise in Mengen von 0,1 bis 20 Gew.-%, bezogen auf das in der Zubereitung enthaltene Polymerisat P, eingesetzt, so dass die Zubereitung eine Mindestfilmbildetemperatur < 15 °C und vorzugsweise im Bereich von 0 bis 10 °C aufweist.

Ferner können die erfindungsgemäß zur Anwendung kommenden Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A-38 27 975 und der EP-A-417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A-39 01 073, wenn das Copolymer P Carbonylgruppen enthaltende Monomere einpolymerisiert enthält.

Die erfindungsgemäßen Zubereitungen sind stabile fluide Systeme, die man zur Beschichtung von einer Vielzahl von Substraten verwenden kann. Danach betrifft die vorliegende Erfindung auch ein Verfahren zum Beschichten von Substraten. Geeignete Substrate sind beispielsweise Holz, Beton, Metall, Glas, Keramiken, Plastik, Putze, Tapeten, gestrichene, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von Viskosität und Pigmentgehalt der Zubereitung sowie dem Substrat mittels Rollen, Bürsten, Rakeln oder als Spray erfolgen.

Die unter Verwendung der erfindungsgemäßen Zubereitungen hergestellten Beschichtungen zeichnen sich durch eine hohe Nassabriebfestigkeit und eine gute Haftung in nassem Zustand aus. Eine verbesserte Nassabriebfestigkeit, d. h. eine verbesserte mechanische Stabilität der Beschichtungen gegenüber abrasiven Einflüssen im feuchten Zustand ist für die Witterungsstabilität der Beschichtungen günstig und bewirkt auch, dass die Beschichtungen abwaschbar sind. Darüber hinaus sind die Beschichtungen nicht klebrig und zeichnen sich durch eine hohe Blockfestigkeit aus.

Die vorteilhaften Eigenschaften des Polymerisats P als Bindemittel gegenüber Bindemittelpolymerisaten aus dem Stand der Technik, insbesondere die verbesserte Nassabriebfestigkeit, macht sich sowohl bei pigmenthaltigen Zubereitungen mit einer PVK < 40 % bemerkbar als auch bei Zubereitungen mit einer PVK > 40 % oder einer PVK > 60 %. Besonders deutlich werden die erfindungsgemäßen Vorteile, wenn die Zubereitungen eine PVK > 40 % und bis zu 85 % aufweisen, z. B. eine PVK von etwa 45 % oder eine PVK von 70 bis 80 %. Demnach betrifft die vorliegende Erfindung auch die Verwendung der Polymerisate P zur Verbesserung der Nassabriebfestigkeit von pigmenthaltigen zubereitungen.

Die im Folgenden aufgeführten Beispiele sollen die Erfindung verdeutlichen, ohne sie jedoch einzuschränken.

I. Herstellung und Charakterisierung der Polymerisatdispersionen (Komponente A)

Die mittlere Teilchengröße (z-Mittelwert) der Polymerisatteilchen wurde durch dynamische Lichtstreuung (Photonenkorrelationsspektroskopie) an einer 0,01 gew.-%igen Dispersion in Wasser bei 23 °C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Bestimmung der Mindestfilmbildetemperatur (MFT) der Polymerisatdispersionen erfolgte in Ahnlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen ein weißes Pulver bildet. Anhand des bekannten Temperaturprofils der Platte wird die MFT visuell bestimmt.

Vergleichsdispersion VD1

In einen Reaktor wurden 234 g entionisiertes Wasser, 38 g wässrige Natriumpyrophosphatlösung (5 gew.-%ig) und 4,61 g eines Polystyrolsaatlatex (Teilchengröße etwa 30 nm, Feststoffgehalt etwa 33 Gew.-%) vorgelegt. Unter Stickstoffatmosphäre wurde auf 85 °C erwärmt. Anschließend gab man 7,24 g wässrige Initiatorlösung zu. Danach gab man eine Monomeremulsion innerhalb von 3 Stunden und die verbleibende Initiatorlösung innerhalb von 4 Stunden zu. Nach Beendigung der Initiatorzugabe hielt man die Temperatur 1 Stunde bei und kühlte dann auf 60 °C ab. Danach gab man 6,36 g einer 15 gew.-%igen, wässrigen tert.-Butylhydroperoxidlösung und 7,25 g einer wässrigen, 13,1 gew.-%igen Acetonbissulfitlösung über getrennte Zuläufe in den Reaktor. Man behielt die 60 °C 1 Stunde bei. Anschließend kühlte man auf Raumtemperatur und stellte den pH-Wert mit 10 gew.-%iger Natronlauge auf 7,4 ein. Die erhaltene Dispersion war frei von Koagulat und wies einen Feststoffgehalt von 60,1 Gew.-% auf. Der gewichtsmittlere Teilchendurchmesser des Polymerisats lag bei 270 nm. Die MFT lag bei 6 °C.

| | |
|---|---|
| Initiatorlösung: | 2,38 g Natriumperoxodisulfat<br>70,00 g entionisiertes Wasser |
| Monomeremulsion: | 227,73 g entionisiertes Wasser<br>21,11 g Emulgatorlösung 1<br>47,50 g Emulgatorlösung 2 356,25 g Methylmethacrylat<br>502,55 g n-Butylacrylat<br>19,00 g Methacrylsäure<br>72,20 g einer 25 gew.-%igen Lösung von N-(Methacryloxyethyl)imidazolidin-2-on in Methylmethacrylat |
| Emulgatorlösung 1: | 45 gew.-%ige Lösung von (Dodecylsulfonylphenoxy)benzolsulfonsäurenatriumsalz (Dowfax® 2A1 der Dow Chemicals) in Wasser |
| Emulgatorlösung 2: | 30 gew.-%ige Lösung des Natriumsalzes eines Schwefelsäurehalbestergemisches von $C_{10}$-$C_{16}$-Alkyl-Ethoxylaten (mittlerer EO-Grad 30) in Wasser (Disponil® FES 77 der Henkel KGaA). |

Dispersion D1

In der für VD1 beschriebenen Weise wurde mit geänderter Monomerzusammensetzung eine erfindungsgemäße Dispersion D1 hergestellt. Am Anschluss an die Polymerisationsreaktion wurde der pH-Wert mit 10 gew.-%iger Natronlauge auf einen Wert von 7,3 eingestellt. Die erhaltene Dispersion war frei von Koagulat und wies einen Feststoffgehalt von 58,2 Gew.-% auf. Der mittlere Teilchendurchmesser der Polymerisatteilchen lag bei 345 nm. Die MFT lag bei 5 °C.

| | |
|---|---|
| Monomeremulsion: | 193,71 g Wasser<br>21,11 g Emulgatorlösung 1<br>47,50 g Emulgatorlösung 2 |

356,25 g Methylmethacrylat
502,55 g n-Butylacrylat
10,22 g Vinylphosphonsäure
72,20 g einer 25 gew.-%igen Lösung von N-(Methacryloxyethyl)imidazolidin-2-on in Methylmethacrylat.

Dispersion D2

Die Herstellung der Dispersion D2 erfolgte analog der Herstellung der von VD1. Im Anschluss an die Polymerisation wurde der pH-Wert mit 10 gew.-%iger Natronlauge auf 9,1 eingestellt. Die erhaltene Dispersion war koagulatfrei und wies einen Feststoffgehalt von 59,9 Gew.-% auf. Der mittlere Teilchendurchmesser der Polymerisatteilchen lag bei 267 nm. Die MFT lag bei 5 °C.

Monomeremulsion: 196,27 g entionisiertes Wasser
21,11 g Emulgatorlösung 1
47,50 g Emulgatorlösung 2
356,25 g Methylmethacrylat
502,55 g n-Butylacrylat
15,32 g Vinylphosphonsäure
72,20 g einer 25 gew.-%igen Lösung von N-(Methacryloxyethyl)imidazolidin-2-on in Methylmethacrylat.

II. Herstellung der erfindungsgemäßen Zubereitungen

1. Dispersionsfarben mit einer PVK von 46,9 %; Formulierung (I) (Beispiele V1, 1 und 2)
In einem Gefäß wurden folgende Bestandteile vorgelegt:

| | |
|---|---|
| 105,60 g | Wasser |
| 2,00 g | verdicker[1)] |
| 0,80 g | 2-Amino-2-methylpropanol mit 5 % Wasser |
| 1,00 g | Dispergiermittel[2)] |
| 3,40 g | 10 gew.-%-ige, wässrige Tetrakaliumpyrophosphat-Lösung |
| 1,70 g | handelsübliches Biozid[3)] |
| 3,40 g | handelsüblicher Entschäumer[4)] |
| 10,10 g | Propylenglykol |
| 10,10 g | Dipropylenglykol-n-butylether |
| 190,10 g | Titandioxidpigment[5)] |
| 181,60 g | Feldspat[6)] |
| 50,70 g | kalzinierter Kaolin[7)] |

Die Bestandteile wurden für 20 Minuten in einem Hochgeschwindigkeitsdispergator vermischt. Anschließend gab man folgende Bestandteile unter Rühren zu:

| | |
|---|---|
| 266,01 g | Polymerdispersion aus I (60,1 gew.-%ig) |
| 2,50 g | handelsüblicher Entschäumer[4)] |
| 11,80 g | handelsüblicher Verdicker[8)] |
| 159,00 g | Wasser |

Die anwendungstechnischen Eigenschaften der Dispersionsfarben sind in Tabelle 1 zusammengefasst.

2. Dispersionsfarbe mit einer PVK von 72 % (Formulierung II) (Beispiele V2, 3 und 4)

| | |
|---|---|
| 253,00 g | Wasser |

(fortgesetzt)

| | |
|---|---|
| 1,00 g | 20 gew.-%ige wässrige KOH |
| 6,00 g | handelsüblicher Verdicker[1)] |
| 3,00 g | Dispergiermittel[9)] |
| 3,00 g | 50 gew.-%ige, wässrige Tetrakaliumpyrophosphat-Lösung |
| 2,00 g | Konservierungsmittel[10)] |
| 2,00 g | Entschäumer[11)] |
| 95,00 g | Titandioxid-Pigment[12)] |
| 215,00 g | Calciumcarbonat, 2 µm[13)] |
| 180,00 g | Calciumcarbonat, 5 µm[14)] |
| 65,00 g | Talk/Dolomit, 6 µm[15)] |

wurden in einem Hochgeschwindigkeitsdispergator miteinander vermischt. Hierzu gab man unter Rühren

| | |
|---|---|
| 2,00 g | Entschäumer[11)] |
| 129,00 g | wässrige Polymerisatdispersion aus I (60,1 gew.-%ig) |
| 17,00 g | Wasser |

Die anwendungstechnischen Eigenschaften der Dispersionsfarben sind in Tabelle 2 zusammengefasst.

1) Hydroxyethylcellulose mit einer Viskosität von 30 Pas (bestimmt als 2%ige Lösung in Wasser bei 25 °C); Natrosol® 250 HR der Hercules GmbH Düsseldorf.
2) 30 gew.-%ige wässrige Lösung eines Ammoniumpolyacrylats; Pigmentverteiler A der BASF AG, Ludwigshafen.
3) Proxel®GXL der Zeneca GmbH, Frankfurt.
4) Foammaster®S der Henkel KGaA, Düsseldorf
5) Kronos®2101 der Kronos, Houston/Texas
6) Minex®4 der Unimin Speciality Minerals Inc. Elco/I1-linois, mittlere Korngröße 7,5 µm
7) Icecap® der Burgess Pigment Co., Sandersville, Georgia
8) 20 gew.-%ige Lösung eines assoziativ verdickenden Polyurethans, Acrysol RM 202 der Rohm and Haas Deutschland GmbH, Frankfurt
9) 45 gew.-%ige wässrige Lösung eines Natriumpolyacrylats; Pigmentverteiler S der BASF AG, Ludwigshafen.
10) Parmetol@A26 der Schulke & Mayr GmbH, Norderstedt.
11) Agitan 255 der Münzing-Chemie GmbH, Heilbronn
12) Kronos®2300 der Kronos Titan GmbH, Leverkusen
13) Calcit, mittlere Teilchengröße 2 µm; Omyacarb 2GU der Omya GmbH, Köln
14) Calcit, mittlere Teilchengröße 5 µm; Omyacarb 5GU der Omya GmbH, Köln
15) Talk/Dolomit, mittlere Teilchengröße 6 µm; Naiatsch SE-Micro der Luzenac Deutschland GmbH, Düsseldorf.

III.Bestimmung der anwendungstechnischen Eigenschaften

1. Abriebfestigkeit

Die Bestimmung der Abriebfestigkeit erfolgte für die Formulierung I nach ASTM D 2486 mittels einer "Gardner"-Scheuermaschine und einem standardisierten Scheuermedium (abrasiver Typ SC-2).

Die Dispersionsfarben der Formulierung I wurden mit einem Kastenrakel (Spalthöhe 175 µm, 7 MIL) auf Leneta-Folien aufgebracht. Anschließend wurden die Folien unter Normklima (23 °C, 50 % rel. Luftfeuchtigkeit) in einer Klimakammer 14 Tage getrocknet. Die Trockenschichtdicke lag bei etwa 50 µm.

Für jede Dispersionsfarbe wurde an 3 Folien der Abriebtest durchgeführt. Hierzu wurden in der Mitte der Folie ein 250 µm dicker Blechstreifen unterlegt. Anschließend wurde Scheuerpaste aufgebracht und mit einer Nylonbürste solange gescheuert, bis die Beschichtung an der Stelle, wo das Blech unterlegt war, durchgescheuert war. Angegeben wird die Anzahl von Doppelhüben, die erforderlich ist, um die Beschichtung an einer Stelle vollständig durchzuscheuern. Angegeben ist der Durchschnitt zweier Werte, die weniger als 25 % voneinander abweichen.

Die Dispersionsfarben der Formulierung II wurden in Anlehnung an DIN 53778 auf ihre Abriebfestigkeit geprüft: Mit Hilfe eines 60 mm breiten Rakels wurde auf eine Leneta-Folie von ca. 430 x 80 mm ein Anstrichfilm aufgetragen. Die Spalthöhe wurde so gewählt, dass eine Trockenschichtdicke von 100 µm resultierte. Der Film wurde bei Raumtemperatur 7 Tage getrocknet. Dann wurde in einem Scheuergerät unter ständigem Zutropfen einer 0,25%igen wässrigen Lösung von n-Dodecylbenzolsulfonat-Natriumsalz eine Scheuerbürste über den Anstrich geführt. Die Anzahl der Doppelhübe bis zum Durchscheuern des Anstrichs diente als Maß für die Scheuerfestigkeit.

2. Blockfestigkeit

Die Blockfestigkeit wurde gemäß ASTM D 4946 bestimmt. Hierzu brachte man die Dispersionsfarben aus II mit einem Kastenrakel (3 MIL, Spalthöhe 75 µm) auf Leneta-Folien auf. Anschließend trocknete man die Folien 24 Stunden unter Norm-Klimabedingungen. Die getrockneten, beschichteten Folien wurden anschließend in 3,8 x 3,8 cm große Quadrate zerschnitten. Die Quadrate wurden mit den beschichteten Seiten aufeinandergelegt und zwischen zwei Glasplatten plaziert. Auf diese Glasplatten gab man ein Gewicht von 2 kg. Diese Anordnung wurde 24 Stunden bei 50 °C aufbewahrt. Anschließend untersuchte man, wie sich die Folien voneinander entfernen lassen. Hierzu legte man eine Bewertungsskala von 0 bis 10 zugrunde:

0 = 75 bis 100 % Abriss der Beschichtung
1 = 50 bis 75 % Abriss
2 = 25 bis 50 % Abriss
3 = 5 bis 25 % Abriss
4 = sehr klebrig: 0 bis 5 % Abriss
5 = mäßige Klebrigkeit
6 = leichte Klebrigkeit
7 = leichte bis sehr leichte Klebrigkeit
8 = sehr leichte Klebrigkeit
9 = kaum klebrig
10 = nicht klebrig

3. Nasshaftung

Die Nasshaftung wurde wie folgt bestimmt: In einem ersten Schritt wurden die Leneta-Folien mit lösungsmittelhaltigem Alkydharzlack (Glasurit EA, Hochglanzlack der BASF deco GmbH, Köln) mit einem Kastenrakel (Spalthöhe 180 µm) beschichtet. Die Folien wurden 24 Stunden in einer Normklimakammer und anschließend 14 Tage in einem Ofen bei 50 °C getrocknet. Anschließend wurden die Dispersionsfarben aus II mit einem Applikator (Spalthöhe 250 µm, 10 MIL) auf die mit Alkydharz beschichteten Leneta-Folien als zweite Beschichtung aufgebracht. Die so erhaltenen Folien wurden 3 Tage unter Norm-Klimabedingungen getrocknet. Aus jeder Folie wurden 3 Prüfkörper herausgeschnitten. Jeder Prüfkörper wurde horizontal mit einer Rasierklinge angeschnitten. Anschließend führte man einen Frost-Tau-Test durch. Hierzu wässerte man die Prüfkörper und bewahrte sie anschließend in einem Tiefkühlschrank 16 Stunden bei -20 °C auf. Dieser Vorgang wurde noch zweimal wiederholt. Anschließend ließ man die Proben auf Raumtemperatur erwärmen und wässerte sie dann erneut 10 Minuten. Danach wurde die Haftung der Beschichtung am Anschnitt durch Kratzen mit dem Fingernagel bestimmt. Hierbei legte man eine Bewertungsskala von 0 bis 5 zugrunde, wobei 0 für eine optimale Adhäsion und 5 für keine Adhäsion (fehlerfreies Abziehen) steht. Die Werte 1 bis 4 stehen für Zwischenwerte.

Tabelle 1:

| Formulierungen mit PVK 46,9 % (Formulierung I) | | | | | |
|---|---|---|---|---|---|
| Beispiel | Dispersion | VPH[2]/% | Blockfestigkeit | Nasshaftung | Nassabriebfestigkeit[3] |
| V1[1] | VD1 | 0 | 10 | 1-2 | 1200 |
| 1 | D1 | 1,0 | 10 | 1-2 | 2800 |
| 2 | D2 | 1,5 | 10 | 1-2 | 2800 |

1) Vergleichsbeispiel
2) Vinylphosphonat
3) nach ASTM D 2486

Tabelle 2:

| Viskositätsstabilität der Formulierungen mit PVK 46,9 % (Formulierungen I) | | | |
|---|---|---|---|
| Beispiel | Dispersion | Viskosität[1] [KU] | |
| | | frisch | nach 2 Wochen bei 50 °C |
| V1 | VD1 | 83 | 93 |
| 1 | D1 | 82 | 82 |
| 2 | D2 | 83 | 82 |

1) bei niedriger Scherung, angegeben in Krebs-Einheiten (KU), bestimmt in Anlehnung an ASTM D-562-81

Tabelle 3:

| Formulierung mit PVK 72 % (Formulierung II) | | | |
|---|---|---|---|
| Beispiel | Dispersion | VPH[1)]/% | Nassabriebfestigkeit[2)] |
| V2 | VD1 | 0 | 590 |
| 3 | D1 | 1,0 | 1210 |
| 4 | D2 | 1,5 | 1210 |

1) Vinylphosphonat
2) nach DIN 53778

## Patentansprüche

**1.** Pigmenthaltige Beschichtungsmittel, enthaltend:

i) wenigstens ein Polymerisat P in Form einer wässrigen Polymerdispersion, das Phosphonatgruppen aufweist, als Bindemittel,
ii) wenigstens ein anorganisches Pigment,
iii) gegebenenfalls einen oder mehrere anorganische Füllstoffe und
iv) übliche Hilfsmittel,

worin das Polymerisat P durch radikalische, wässrige Emulsionspolymerisation ethylenisch ungesättigter Monomere erhältlich ist, die

- 90 bis 99,9 Gew.-% wenigstens eines Monomers a, ausgewählt unter vinylaromatischen Monomeren, den Estern der Acrylsäure mit $C_1$-$C_{12}$-Alkanolen, den Estern der Methacrylsäure mit $C_1$-$C_{12}$-Alkanolen, den Vinylestern aliphatischer $C_1$-$C_{12}$-Monocarbonsäuren, Ethylen und Vinylchlorid und

- 0,1 bis 10 Gew.-% wenigstens eines davon verschiedenen Monomers b der allgemeinen Formel (I)

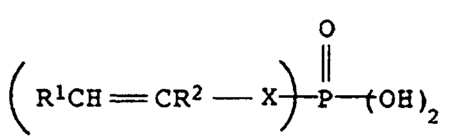

(I)

oder ein Salz davon umfassen, worin

$R^1$ für Wasserstoff, $C_1$-$C_4$-Alkyl, COOH, $-CO_2$-Alk-OH oder - $CO_2$-Alk-P(O)$(OH)_2$ und

$R^2$ für Wasserstoff, $C_1$-$C_4$-Alkyl, $-CH_2$-$CO_2H$, $-CH_2$-$CO_2$-Alk-OH oder $CH_2$-$CO_2$-Alk-P(O)$(OH)_2$ stehen, worin Alk $C_1$-$C_4$-Alkylen bedeutet,

X eine Einfachbindung, Alkylen, Arylen, $-R^3-Z-O-R^4$ oder - $R^3-Z-NH-R^4-$ bedeutet, worin

$R^3$ an das Kohlenstoffatom der Doppelbindung gebunden ist und für eine Einfachbindung, Alkylen oder Arylen steht,

$R^4$ Alkylen oder Arylen bedeutet und

Z für CO oder $SO_2$ steht.

**2.** Beschichtungsmittel nach Anspruch 1, wobei das Monomer b ausgewählt ist unter Vinylphosphonsäure, Allylphosphonsäure, α-Phosphonostyrol, 2-Acrylamido-2-methylpropanphosphonsäure, 2-Methacrylamido-2-methylpropanphosphonsäure, und deren Salzen.

**3.** Beschichtungsmittel nach einem der vorhergehenden Ansprüche, worin die zu polymerisierenden Monomere zusätzlich 0,1 bis 10 Gew.-% Harnstoffgruppen enthaltende Monomere c umfassen.

**4.** Beschichtungsmittel nach einem der vorhergehenden Ansprüche, worin die Monomere a wenigstens ein Monomer a1, dessen Homopolymerisat eine Glasübergangstemperatur > 30 °C aufweist und wenigstens ein Monomer a2, dessen Homopolymerisat eine Glasübergangstemperatur < 20 °C aufweist, umfassen.

**5.** Beschichtungsmittel gemäß einem der vorhergehenden Ansprüche, die, bezogen auf den Feststoffgehalt der zubereitung,

- 5 bis 90 Gew.-% Polymerisat P gemäß einem der Ansprüche 1 bis 4,
- 5 bis 85 Gew.-% wenigstens eines anorganischen Pigments,
- 0 bis 85 Gew.-% anorganische Füllstoffe und
- 0,1 bis 40 Gew.-% übliche Hilfsmittel

enthalten.

**6.** Beschichtungsmittel nach einem der vorhergehenden Ansprüche, wobei das Verhältnis von anorganischen Bestandteilen zu Polymerisat P durch eine Pigmentvolumenkonzentration PVK > 10 % charakterisiert ist.

**7.** Verwendung von Polymerisatdispersionen bzw. Polymerisaten P gemäß einem der Ansprüche 1 bis 6 zur Verbesserung der Nassabriebfestigkeit von polymergebundenen Beschichtungsmassen.

**8.** Verwendung nach Anspruch 7, wobei die polymergebundene Beschichtungsmasse eine Dispersionsfarbe ist.

## Claims

**1.** A pigment-comprising formulation for coating substrates, comprising

i) an aqueous dispersion of at least one polymer P which has phosphonate groups, as binder,

ii) at least one inorganic pigment,

iii)if desired, one or more inorganic fillers and

iv) customary auxiliaries,

wherein the polymer P is obtainable by free-radical aqueous emulsion polymerization of ethylenically unsaturated monomers comprising

- 90 to 99.9 % by weight of at least one monomer a, being selected from vinylaromatic monomers, the esters of acrylic acid with $C_1$-$C_2$-alkanols, the esters of methacrylic acid with $C_1$-$C_{12}$-alkanols, the vinylesters of aliphatic $C_1$-$C_{12}$-monocarboxilic acids, ethylene and vinylchloride and

- 0.1 to 10 % by weight of at least one different monomer b of the general formula (I)

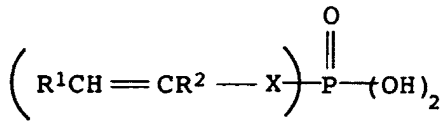

(I)

or a salt thereof, where

$R^1$ is hydrogen, $C_1$-$C_4$-alkyl, COOH, $-CO_2$-Alk-OH or - $CO_2$-Alk-P(O)$(OH)_2$ and

$R^2$ is hydrogen, $C_1$-$C_4$-alkyl, $-CH_2-CO_2H$ $-CH_2-CO_2$-Alk-OH or $CH_2-CO_2$-Alk-P(O)$(OH)_2$, in which Alk is $C_1$-$C_4$-alkylene,

X is a single bond, alkylene, arylene, $-R^3$-Z-O-$R^4$- or - $R^3$-Z-NH-$R^4$-, in which

$R^3$ is attached to the carbon of the double bond and is a single bond, alkylene or arylene,

$R^4$ is alkylene or arylene and

Z is CO or $SO_2$,

**2.** A formulation as claimed in claim 1, wherein the monomer b is selected from the group consisting of vinylphosphonic acid, allylphosphonic acid, α-phosphonostyrene, 2-acrylamido-2-methylpropanephosphonic acid, 2-methacrylamido-2-methylpropanephosphonic acid, and salts thereof.

**3.** A formulation as claimed in any of the preceding claims, wherein the monomers to be polymerized additionally comprise from 0.1 to 10% by weight of ethylenically unsaturated monomers c having urea groups.

**4.** A formulation as claimed in any of the preceding claims, wherein the monomers a comprise at least one monomer a1 whose homopolymer has a glass transition temperature of > 30°C and at least one monomer a2 whose homopolymer has a glass transition temperature of < 20°C.

**5.** A formulation as claimed in any of the preceding claims, comprising, based on the solids content of the formulation,

- from 5 to 90% by weight of a polymer P as set forth in any of claims 1 to 4,
- from 5 to 85% by weight of at least one inorganic pigment,
- from 0 to 85% by weight of inorganic fillers, and
- from 0.1 to 40% by weight of customary auxiliaries.

**6.** A formulation as claimed in any of the preceding claims, where the ratio of inorganic constituents to polymer P is reflected in a pigment volume concentration p.v.c. of > 10%.

**7.** The use of a polymer dispersion or of a polymer P as set forth in any of claims 1 to 6 for improving the wet abrasion resistance of polymer-bound coating materials.

**8.** The use as claimed in claim 7, wherein said polymer-bound coating material is an emulsion paint.

## Revendications

**1.** Matières de revêtement contenant des pigments contenant :

i) en tant que liant, au moins un polymère P sous forme de dispersion aqueuse de polymère présentant des groupes phosphonate,
ii) au moins un pigment inorganique,
iii) éventuellement une ou plusieurs charges inorganiques et
iv) des adjuvants habituels,

dans lesquelles le polymère P peut être obtenu au moyen d'une polymérisation radicalaire en émulsion aqueuse de monomères à insaturation éthylénique qui comprennent

- 90% à 99,9% en poids d'au moins un monomère a, choisi parmi les monomères vinylaromatiques, les esters de l'acide acrylique avec des alcanols en $C_1$ à $C_{12}$, les esters de l'acide méthacrylique avec des alcanols en $C_1$ à $C_{12}$, les esters d'acides monocarboxyliques en $C_1$ à $C_{12}$ aliphatiques, l'éthylène et le chlorure de vinyle et
- 0,1% à 10% en poids d'au moins un monomère b différent de ceux-ci de formule générale I

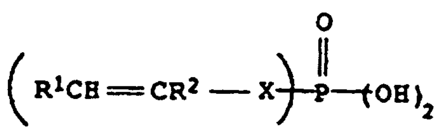

(I)

ou un sel de celui-ci, dans laquelle

$R^1$ représente un atome d'hydrogène, un groupe alkyle en $C_1$ à $C_4$, COOH, $-CO_2$-alk-OH ou $CO_2$-alk-P (O) $(OH)_2$ et

$R^2$ représente un atome d'hydrogène, un groupe alkyle en $C_1$ à $C_4$, $-CH_2-CO_2H$, $-CH_2-CO_2$-alk-OH ou $CH_2-CO_2$-alk-P(O) (OH) $_2$, où alk désigne un groupe alkylène en $C_1$ à $C_4$,

X représente une liaison simple, un groupe alkylène, arylène, $-R^3$-Z-O-$R^4$ ou $-R^3$-Z-NH-$R^4$, où

$R^3$ est lié à l'atome de carbone de la double liaison et représente une liaison simple, un groupe alkylène ou arylène,
$R^4$ représente un groupe alkylène ou arylène et
Z représente CO ou $SO_2$.

**2.** Matières de revêtement selon la revendication 1, dans lesquelles le monomère b est choisi parmi l'acide vinylphosphonique, l'acide allylphosphonique, l'α-phosphonostyrène, l'acide 2-acrylamido-2-méthylpropanephosphonique, l'acide 2-méthacrylamido-2-méthylpropanephosphonique, et leurs sels.

**3.** Matières de revêtement selon l'une quelconque des revendications précédentes, dans lesquelles les monomères à polymériser comprennent en plus 0,1% à 10% en poids de monomères c contenant des groupes urée.

**4.** Matières de revêtement selon l'une quelconque des revendications précédentes, dans lesquelles les monomères a comprennent au moins un monomère a1, dont l'homopolymère présente une température de transition vitreuse supérieure à 30°C, et au moins un monomère a2, dont l'homopolymère présente une température de transition vitreuse inférieure à 20°C.

**5.** Matières de revêtement selon l'une quelconque des revendications précédentes qui contiennent, par rapport à la teneur en matières solides de la préparation,

- 5% à 90% en poids du polymère P selon l'une quelconque des revendications 1 à 4,
- 5% à 85% en poids d'au moins un pigment inorganique,
- 0% à 85% en poids de charges inorganiques et
- 0,1% à 40% en poids d'adjuvants habituels.

**6.** Matières de revêtement selon l'une quelconque des revendications précédentes, dans lesquelles le rapport des composants inorganiques au polymère P est **caractérisé par** une concentration pigmentaire volumique CPV supérieure à 10%.

7. Utilisation de dispersions de polymères ou de polymères P selon l'une quelconque des revendications 1 à 6 pour améliorer la résistance à l'abrasion au mouillé de matières de revêtement liées par un polymère.

8. Utilisation selon la revendication 7, dans laquelle la matière de revêtement liée par un polymère est une peinture en dispersion.